# EUROPÄISCHE PATENTSCHRIFT

(11) **EP 3 815 946 B1**
(45) Veröffentlichungstag und Bekanntmachung des Hinweises auf die Patenterteilung: **24.05.2023**
(21) Anmeldenummer: 20198012.5
(22) Anmeldetag: 24.09.2020
(51) Int. Cl.: B60K 7/00, B60K 17/04

(54) **ACHSANTRIEB MIT EINZELN ANGETRIEBENEN RADNABEN**
AXLE DRIVE WITH INDIVIDUALLY DRIVEN WHEEL HUBS
ENTRAÎNEMENT D'ESSIEU POURVU DE MOYEUX DE ROUE À ENTRAÎNEMENT INDIVIDUEL

(30) Priorität: 28.10.2019 DE 102019129025
(43) Veröffentlichungstag der Anmeldung: 05.05.2021
(73) Patentinhaber: Linde Material Handling GmbH, 63743 Aschaffenburg (DE)
(72) Erfinder: EDMUNDS, Wayne, Newport Wales (GB)
(74) Vertreter: Patentship Patentanwaltgesellschaft

(56) Entgegenhaltungen:
- EP-A1- 2 921 331
- WO-A1-2019/064733
- CN-A- 105 922 858

## Beschreibung

Die Erfindung betrifft einen Achsantrieb einer mobilen Arbeitsmaschine, insbesondere Flurförderzeug, mit Elektromotoren zum Antrieb von zwei auf einer Achsmittellinie angeordneten, einzeln angetriebenen Radnaben, wobei die Radnaben jeweils mit mindestens zwei, zu einem Motorenverbund mechanisch miteinander gekoppelten Elektromotoren in Antriebsverbindung stehen, wobei die Motorenverbunde jeweils koaxial zueinander fluchtende Elektromotoren mit gemeinsamer Rotationsachse aufweisen.

In der DE 1 430 322 A ist ein Achsantrieb beschrieben, der für den Einsatz in einem als Gabelstapler ausgebildeten Flurförderzeug vorgesehen ist und zwei Einzelradantriebe umfasst, die jeweils aus einem Elektromotor, einem Getriebe und einer angetriebenen Radnabe bestehen.

Gabelstapler, die über eine größere Hubkraft verfügen, als Gabelstapler des häufigsten Tragkraftbereichs bis 8 Tonnen Traglast, beispielsweise Fahrzeuge mit einer Traglast von 16 Tonnen und mehr, haben ein größeres Eigengewicht und müssen - mit oder ohne Last - durch einen Achsantrieb bewegt werden, der ausreichend leistungsfähig ist. Zu diesem Zweck würde man bei einem gattungsgemäßen Achsantrieb den Elektromotor jedes Einzelradantriebs vergrößern, was jedoch neben der erwünschten Leistungssteigerung einige Nachteile mit sich bringt.

So wird durch einen größeren Durchmesser der Elektromotoren erheblich mehr Bauraum benötigt, einerseits für die Elektromotoren selbst, andererseits bei einem Achsantrieb, wie in der genannten Druckschrift offenbart, auch infolge deren vergrößerten Abstands zur Achsmittellinie. Dies geht zu Lasten anderer Komponenten und kann beispielsweise bei einem batterieelektrisch betriebenen Fahrzeug zu einem kleineren Bauraum für eine Traktionsbatterie führen. Ferner sind größere Elektromotoren häufig überproportional teuer und aufgrund ihrer Abmessungen und ihres Gewichts nur mit hohem Aufwand zu montieren. Schließlich kommt im Fahrbetrieb hinzu, dass infolge großer rotierender Massen der Rotoren der Elektromotoren und von rotierenden Elementen von Getrieben, die im Kraftfluss zwischen den Elektromotoren und den Radantrieben angeordnet sind, der Achsantrieb nur deutlich verzögert auf Beschleunigungs- und Bremsbefehle reagiert.

Aus der WO 2019/064733 A1, der EP 2 921 331 A1 und der CN 105 922 858 A ist jeweils ein gattungsgemäßer Achsantrieb eines Fahrzeugs mit den Merkmalen des Oberbegriffs des Patentanspruchs 1 bekannt.

Der vorliegenden Erfindung liegt die Aufgabe zu Grunde, einen Achsantrieb der eingangs genannten Art zur Verfügung zu stellen, der bei erhöhter Leistungsfähigkeit insbesondere im Hinblick auf einen relativ geringen Bau- und Montageaufwand und wenig Platzbedarf optimiert ist.

Diese Aufgabe wird erfindungsgemäß dadurch gelöst, dass die Motorenverbunde jeweils achsparallel zur Achsmittellinie und achsparallel zueinander angeordnet sind und im Kraftfluss zwischen jedem Motorenverbund und der davon angetriebenen Radnabe ein Verbindungsgetriebe angeordnet ist.

Vorteilhafte Ausgestaltungen und Weiterbildungen der Erfindung sind Gegenstand von Unteransprüchen.

Der erfindungswesentliche Gedanke besteht demnach darin, für jeden Einzelradantrieb des Achsantriebs anstelle von jeweils einem vergrößerten Elektromotor eine Mehrzahl von Elektromotoren, nämlich mindestens zwei Elektromotoren, zu einem Motorenverbund mechanisch miteinander zu koppeln, so dass die Elektromotoren des Motorenverbunds zusammen wie ein einzelner großer Elektromotor wirken. Jeder Motorenverbund eines Einzelradantriebs kann dabei einzeln bezüglich Antriebsmoment und Drehzahl geregelt werden, insbesondere auch in Abhängigkeit eines Lenkwinkels der mit dem Achsantrieb ausgestatteten Arbeitsmaschine.

Dabei können relativ kleine Elektromotoren verwendet werden, die jedoch in ihrer Summe die gewünschte Leistung zur Verfügung stellen, wie sie in einer größeren mobilen Arbeitsmaschine, insbesondere einem Flurförderzeug mit einem Tragkraftbereich über 8 Tonnen Traglast, erforderlich ist. Solche Elektromotoren sind häufig Standardmotoren und daher in relativ hohen Stückzahlen und preiswert verfügbar.

Darüber hinaus sind sie aufgrund ihres relativ geringen Bauvolumens und Gewichts einfach zu montieren und zu warten.

Die im erfindungsgemäßen Achsantrieb zum Einsatz kommenden Elektromotoren lassen sich leicht im Bereich eines günstigen Wirkungsgrads betreiben. Dadurch werden Verluste minimiert, die andernfalls in Form von Wärme anfallen und den Aufwand zum Abführen von Wärme erhöhen würden (z.B. größere Kühlanlage). Ferner wird dadurch auch der Verschleiß verringert und die Leistungsfähigkeit der Elektromotoren optimal genutzt.

Durch relativ kleine Durchmesser der Rotoren der Elektromotoren und der sich drehenden Elemente in nachgeschalteten Getrieben bleiben die rotierenden Massen klein.

Bei Ausfall eines Elektromotors in einem Motorenverbund fällt dieser nicht vollständig aus, sondern der oder die verbleibenden Elektromotoren des vom Ausfall betroffenen Motorenverbunds vermögen nach wie vor Leistung in den Achsantrieb einzuspeisen. Es kommt daher nicht zu unvorhergesehenen Lenkreaktionen des Fahrzeugs, wie sie bei einem Komplettausfall eines der Einzelradantriebe dadurch entstehen könnten, dass das Antriebsmoment des Achsantriebs in einem solchen Zustand nur noch von einer der Radnaben übertragen wird.

Die Motorenverbunde weisen jeweils koaxial zueinander fluchtende Elektromotoren mit gemeinsamer Rotationsachse auf, d. h. die Rotoren der Elektromotoren jedes Motorenverbunds drehen sich um eine gemeinsame Achse.

Erfindungsgemäß sind die Motorenverbunde jeweils achsparallel zur Achsmittellinie und achsparallel zueinander angeordnet und ist im Kraftfluss zwischen jedem Motorenverbund und der davon angetriebenen Radnabe ein Verbindungsgetriebe angeordnet. Die Verbindungsgetriebe überbrücken den Abstand, der durch die achsparallele Anordnung der Motorenverbunde zur Achsmittellinie vorhanden ist, und dienen der Herabsetzung der Elektromotordrehzahl auf das niedrigere Niveau der Radnabendrehzahl.

Die koaxial zueinander fluchtenden Elektromotoren eines Motorenverbunds können jeweils unmittelbar hintereinander angeordnet sein, wobei sich in diesem Fall das zugeordnete Verbindungsgetriebe an einem der beiden Enden einer solchen Aneinanderreihung von Elektromotoren befindet.

Gemäß einer Weiterbildung der Erfindung wird jedoch bevorzugt, dass ein erster Motorenverbund auf seiner Rotationsachse eine axial zwischen zwei Elektromotoren angeordnete erste Koppelwelle aufweist, die an beiden Wellenenden jeweils mit einem der Elektromotoren in Antriebsverbindung steht, und dass ein zweiter Motorenverbund auf seiner Rotationsachse eine axial zwischen zwei Elektromotoren angeordnete zweite Koppelwelle aufweist, die an beiden Wellenenden jeweils mit einem der

Elektromotoren in Antriebsverbindung steht. Dadurch kann axial zwischen den Elektromotoren Leistung abgegriffen werden und es lässt sich eine platzsparende Bauweise erzielen.

Zweckmäßigerweise ist die erste Koppelwelle mit einem ersten Antriebsritzel versehen, welches ein Eingangselement eines ersten Verbindungsgetriebes bildet, und ist die zweite Koppelwelle mit einem zweiten Antriebsritzel versehen, welches ein Eingangselement eines zweiten Verbindungsgetriebes bildet.

Die Antriebsritzel sind mit Vorteil jeweils als eingangsseitiges Zahnrad der als Stirnradgetriebe ausgeführten Verbindungsgetriebe ausgebildet, die jeweils ein ausgangsseitiges Zahnrad aufweisen, das konzentrisch zur Achsmittelinie angeordnet ist. Jedes ausgangsseitige Zahnrad steht mit einer Radnabe in Antriebsverbindung, beispielsweise über eine Achswelle, die mit einer Keilverzahnung versehen ist, welche in eine in das ausgangsseitige Zahnrad eingearbeitete zentrische Bohrung eintaucht, die mit einer komplementären Keilverzahnung versehen ist.

Das erste und das zweite Verbindungsgetriebe sind bevorzugt parallel zueinander angeordnet.

Hierbei sind in Weiterbildung der Erfindung das erste und das zweite Verbindungsgetriebe zu einem Achsgetriebe räumlich zusammengefasst, wodurch sich Vorteile im Hinblick auf einen geringen Platzbedarf und eine nur relativ wenige Bauteile erfordernde Bauweise ergeben.

Sofern die Elektromotoren - bezogen auf die Axialerstreckung der Rotationsachsen - beiderseits des Achsgetriebes angeordnet sind, ergeben sich symmetrische Verhältnisse. Das Achsgetriebe befindet sich dann zentral zwischen den Elektromotoren.

Dabei kann das Achsgetriebe ein für das erste und das zweite Verbindungstriebe gemeinsames Getriebegehäuse aufweisen.

Die Elektromotoren können am Getriebegehäuse des Achsgetriebes befestigt sein.

Besonders günstige Platzverhältnisse ergeben sich, wenn eine von der Achsmittelinie und der Rotationsachse des ersten Motorenverbunds aufgespannte erste Ebene und eine von der Achsmittellinie und der Rotationsachse des zweiten Motorenverbunds aufgespannte zweite Ebene einen Winkel miteinander einschließen.

Dieser Winkel ist bevorzugt kleiner als 90 Grad, stellt also einen spitzen Winkel dar.

Es erweist sich als günstig, wenn die Achsmittellinie und die Rotationsachsen der Motorenverbunde - in Axialrichtung gesehen - die Eckpunkte eines gleichschenkligen Dreiecks bilden, dessen Basis in einer von den Rotationsachsen der Motorenverbunde aufgespannten dritten Ebene liegt.

Weitere Vorteile und Einzelheiten der Erfindung werden anhand des in den schematischen Figuren dargestellten Ausführungsbeispiels näher erläutert. Dabei zeigt
- Figur 1: eine perspektivische Ansicht eines erfindungsgemäßen Achsantriebs,
- Figur 2: eine weitere perspektivische Ansicht des Achsantriebs,
- Figur 3: eine Ansicht des Achsantriebs in Blickrichtung zu einer der Stirnseiten,
- Figur 4a: eine perspektivische Ansicht von Verbindungsgetrieben des Achsantriebs,
- Figur 4b: eine weitere perspektivische Ansicht der Verbindungsgetriebe,
- Figur 5a: eine perspektivische Ansicht eines Getriebegehäuses des Achsgetriebes des Achsantriebs,
- Figur 5b: eine weitere perspektivische Ansicht des Getriebegehäuses des Achsgetriebes des Achsantriebs,
- Figur 6: eine perspektivische Ansicht einer Getriebegehäusehälfte des Achsgetriebes von innen und
- Figur 7: eine perspektivische Ansicht der in Fig. 6 dargestellten Getriebegehäusehälfte mit eingebautem Achsgetriebe.

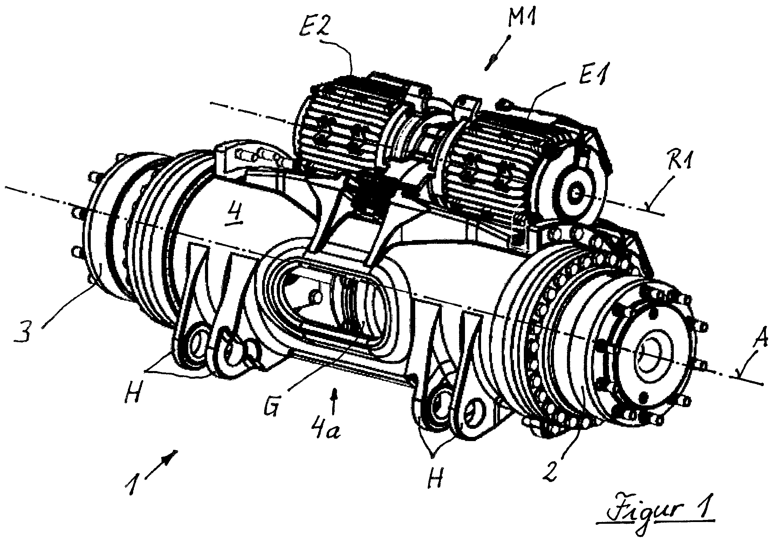

Der in Fig. 1 dargestellte erfindungsmäße Achsantrieb ist im vorliegenden Ausführungsbeispiel Teil eines als Gegengewichts-Gabelstapler ausgebildeten Flurförderzeugs und wird als nicht lenkbare Vorderachse 1 verwendet. Der Achsantrieb ist an beiden Stirnseiten der Vorderachse 1 jeweils mit einer Radnabe 2 bzw. 3 versehen, auf der ein Rad befestigbar ist (oder zwei parallel benachbarte Räder, entsprechend einer Tandemanordnung). Die Radnaben 2, 3 sind einzeln antreibbar, d.h. sie können unabhängig voneinander mit einem individuellen Antriebsmoment und einer individuellen Drehzahl betrieben werden.

Mithin handelt es sich hier um einen Achsantrieb mit Einzelradantrieben - im Gegensatz zu einem Achsantrieb mit einer sogenannten Differential-Antriebsachse, bei der über ein Differentialgetriebe Antriebskraft - normalerweise gleichmäßig - auf beide Radnaben verteilt wird.

An der in Fahrtrichtung vorderen Seite sind an einem Querträger 4 mehrere Haltelaschen H vorgesehen, mit deren Hilfe ein Hubgerüst an dem mit der Vorderachse 1 ausgestatteten Gabelstapler neigbar befestigbar ist.

Achsparallel zu einer Achsmittellinie A sind für den Antrieb der Radnaben 2, 3 mehrere Elektromotoren angeordnet, von denen in der Figur 1 zwei koaxial zueinander fluchtende Elektromotoren E1 und E2 erkennbar sind, die auf noch zu beschreibende Weise mechanisch miteinander zu einem ersten Motorenverbund M1 gekoppelt sind, der eine gemeinsame Rotationsachse R1 der Elektromotoren E1 und E2 aufweist und zum Antrieb der in der Figur 1 rechten Radnabe 2 vorgesehen ist.

Dies geschieht mit Hilfe eines Verbindungsgetriebes, mit dem die Antriebsleistung des ersten Motorenverbunds M1 in die Radnabe 2 eingespeist wird. Zugleich erfolgt eine Herabsetzung der Drehzahl des ersten Motorenverbunds M1 auf das niedrigere Drehzahlniveau der Radnabe 2 und es wird der Abstand zwischen der Rotationsachse R1 des ersten Motorenverbunds M1 und der Achsmittellinie A überbrückt.

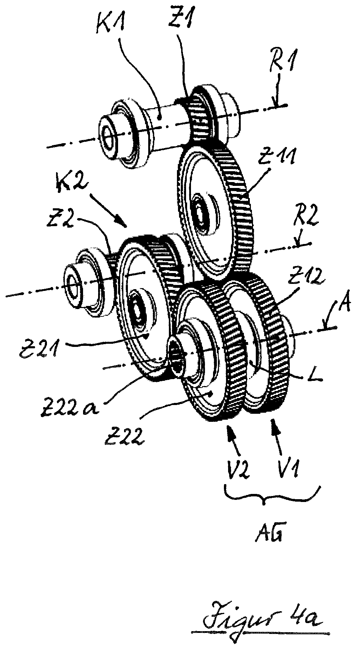

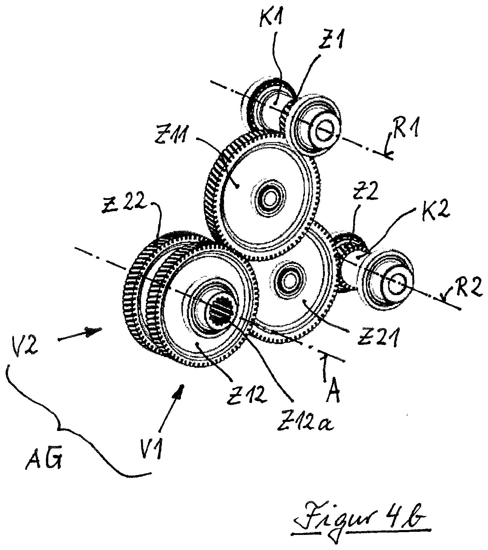

Von dem im Zusammenhang mit der Beschreibung der Figuren 4a und 4b noch im Detail zu erläuternden Verbindungsgetriebe ist in Figur 1 lediglich ein unteres Ende eines Getriebegehäuses G erkennbar, in dem sich das dem ersten Motorenverbund M1 zugeordnete Verbindungsgetriebe als Teil eines Achsgetriebes befindet. Das untere Ende des Getriebegehäuses G ist durch eine mittige Ausnehmung 4a im Querträger 4 sichtbar. Der erste Motorenverbund M1 bildet zusammen mit der Radnabe 2 und dem zwischengeschalteten Verbindungsgetriebe einen ersten Einzelradantrieb.

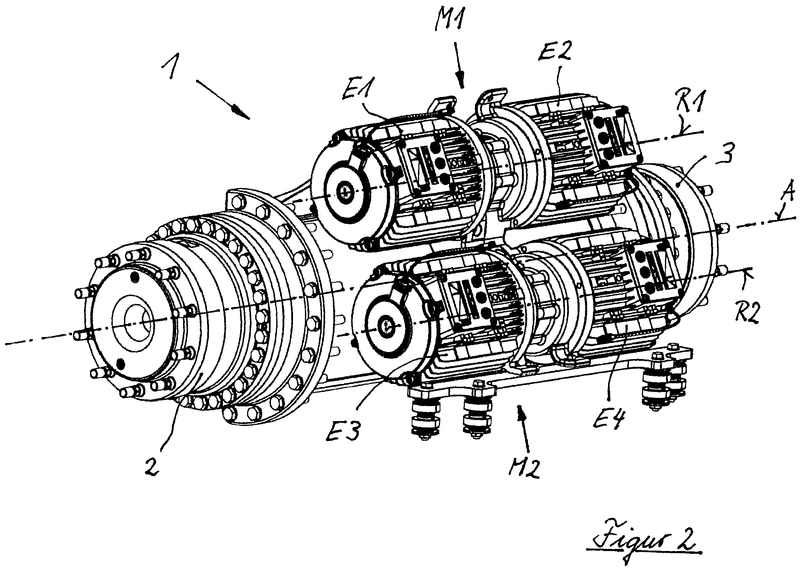

Aus der Darstellung gemäß Figur 2 ist erkennbar, dass unterhalb des ersten Motorenverbunds M1 ein zu dessen Rotationsachse R1 und zur Achsmittellinie A achsparalleler zweiter Motorenverbund M2 angeordnet ist, der - in analoger Bauweise zum ersten Motorenverbund M1 - zwei koaxial zueinander fluchtende und mechanisch miteinander gekoppelte Elektromotoren E3, E4 aufweist, so dass sich eine gemeinsame Rotationsachse R2 der Elektromotoren E3 und E4 des zweiten Motorenverbunds M2 ergibt. Dieser zweite Motorenverbund M2 ist über ein zweites Verbindungsgetriebe mit der in der Figur 2 rechten Radnabe 3 verbunden, wobei sich ein zweiter Einzelradantrieb ergibt.

Es versteht sich, dass jeder Motorenverbund M1, M2 grundsätzlich auch mehr als zwei Elektromotoren aufweisen kann, die mechanisch miteinander gekoppelt sind. Ferner sind auch Bauweisen möglich, bei denen die Motorverbunde M1, M2 nicht achsparallel zur Achsmittellinie A angeordnet sind und/oder bei denen die Elektromotoren nicht koaxial zueinander fluchten.

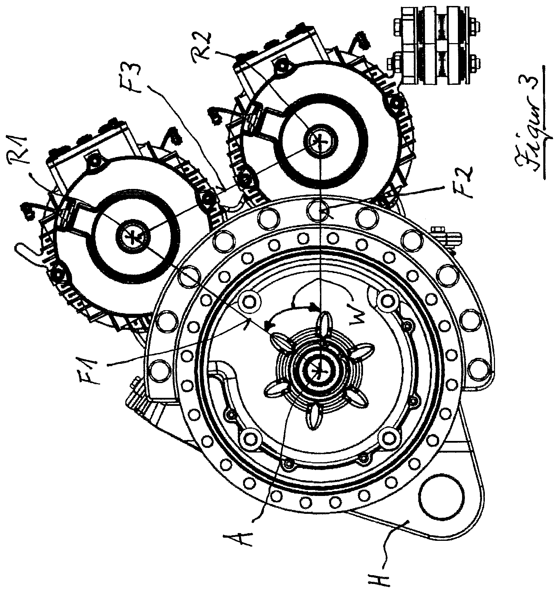

Wie sich in der Zusammenschau mit Figur 3 des vorliegenden Ausführungsbeispiels ergibt, spannen die Achsmittellinie A und die Rotationsachse R1 des ersten Motorenverbunds M1 eine erste Ebene F1 auf. Anders ausgedrückt, die Achsmittellinie A und die Rotationsachse R1 bzw. befinden sich in einer ersten Ebene F1. Die Achsmittellinie A und die Rotationsachse R2 des zweiten Motorenverbunds M2 spannen eine zweite Ebene F2 auf. Die beiden Ebenen F1 und F2 schließen einen spitzen Winkel W ein, also einen Winkel, der kleiner als 90 Grad ist, im vorliegenden Ausführungsbeispiel vorteilhafterweise etwas kleiner als 60 Grad.

Die Achsmittellinie A und die Rotationsachsen R1, R2 der Motorenverbunde M1, M2 bilden - in Axialrichtung gesehen - die Eckpunkte eines gleichschenkligen Dreiecks, dessen Basis in einer von den Rotationsachsen R1, R2 der Motorenverbunde M1, M2 aufgespannten dritte Ebene F3 liegt. Die Dreiecksspitze wird demnach von der Achsmittellinie A gebildet.

In den Figuren 4a und 4b sind die Verbindungsgetriebe dargestellt, mit deren Hilfe der in Einzelradantriebsbauweise ausgeführte Achsantrieb Leistung von den Elektromotoren E1, E2, E3, E4 der beiden Motorenverbunde M1, M2 zu den Radnaben 2, 3 überträgt und die Drehzahl herabsetzt. Zugleich wird durch die Verbindungsgetriebe V1, V2 auch der Abstand zwischen den Rotationsachsen R1, R2 und der Achsmittellinie A überbrückt.

Hierbei weist ein erstes Verbindungsgetriebe V1, das als Stirnradgetriebe ausgeführt ist, eine erste Koppelwelle K1 auf, das mit einem als Zahnrad ausgebildeten Antriebsritzel Z1 versehen ist und an beiden Wellenenden jeweils mit einem der Elektromotore E1 bzw. E2 des ersten Motorenverbunds M1 in Antriebsverbindung steht (in den Figuren 4a und 4b nicht dargestellt). Das in der Figur 4a rechte Wellenende der ersten Koppelwelle K1 ist bei vollständig montiertem Achsantrieb mit dem Elektromotor E1 und das linke Wellenende mit dem Elektromotor E2 drehsynchron gekoppelt, beispielsweise über Keilverzahnungen auf den nicht dargestellten Rotorwellen der Elektromotoren E1, E2. Die Keilverzahnungen greifen in dazu komplementäre Verzahnungen in der hohlen Koppelwelle K1 ein. Das Antriebsritzel Z1 steht in Eingriff mit einem Zwischenzahnrad Z11, das ein ausgangsseitiges, konzentrisch zur Achsmittellinie A angeordnetes Zahnrad Z12 antreibt.

Ein zweites Verbindungsgetriebe V2, das ebenfalls als Stirnradgetriebe ausgeführt ist, weist eine zweite Koppelwelle K2 auf, die mit einem als Zahnrad ausgebildeten Antriebsritzel Z2 versehen ist und an beiden Wellenenden jeweils mit einem der Elektromotore E3 bzw. E4 des zweiten Motorenverbunds M2 antriebsverbunden ist. Das in der Figur 4a rechte Wellenende der zweiten Koppelwelle K2 ist mit dem Elektromotor E3 und das linke Wellenende mit dem Elektromotor E4 drehsynchron gekoppelt, beispielsweise über Keilverzahnungen auf den Rotorwellen der Elektromotoren E3, E4, die in dazu komplementäre Verzahnungen in der hohlen Koppelwelle K2 eingreifen. Das Antriebsritzel Z2 steht in Eingriff mit einem Zwischenzahnrad Z21, das ein ausgangsseitiges, konzentrisch zur Achsmittellinie A angeordnetes Zahnrad Z22 antreibt.

Die Antriebsritzel Z1, Z2 der beiden Verbindungsgetriebe V1, V2 bilden somit jeweils deren Eingangselemente, während die Zahnräder Z12, Z22 jeweils die Ausgangselemente der Verbindungsgetriebe V1, V2 bilden.

Die ausgangsseitigen Zahnräder Z12 und Z22 treiben die Radnaben 2, 3 über nicht dargestellte Achswellen an, die jeweils mit einer Keilverzahnung versehen sind, welche in eine zentrische, mit einer komplementären Keilverzahnung versehenen Bohrung Z12a bzw. Z22a des Zahnrads Z12 bzw. Z22 eingreift. Die beiden Achswellen und die beiden damit drehsynchron gekoppelten Zahnräder Z12, Z22 rotieren unabhängig voneinander. Axial zwischen den beiden Zahnrädern kann ein Axiallager L angeordnet sein (Wälz- oder Gleitlager), um aus einer Schrägverzahnung der Zahnräder Z12, Z22 resultierende Axialkräfte unabhängig von Drehzahldifferenzen zwängungsfrei aufnehmen und übertragen zu können.

Es versteht sich, dass im Bereich der Radnaben 2, 3 jeweils ein zusätzliches Getriebe zur weiteren Drehzahlherabsetzung vorgesehen sein kann (Radnabengetriebe).

Die beiden Verbindungsgetriebe V1, V2 sind parallel zueinander angeordnet und unmittelbar benachbart, so dass sie - wie im vorliegenden Ausführungsbeispiel - platzsparend zu einem Achsgetriebe AG räumlich zusammengefasst sind. Die enge räumliche Nachbarschaft ermöglicht es vorteilhafterweise auch, für die beiden Koppelwellen K1, K2 ein gemeinsames Bauteil zu benutzen, das je nach Einsatz als erste oder zweite Koppelwelle K1 bzw. K2 seitenverkehrt, also um 180 Grad verdreht, eingebaut wird.

Bei den Zwischenzahnrädern Z11 und Z21 der beiden Verbindungsgetriebe V1, V2 handelt es sich um baugleiche Elemente. Die gilt gleichfalls für die beiden ausgangsseitigen Zahnräder Z22 und Z12.

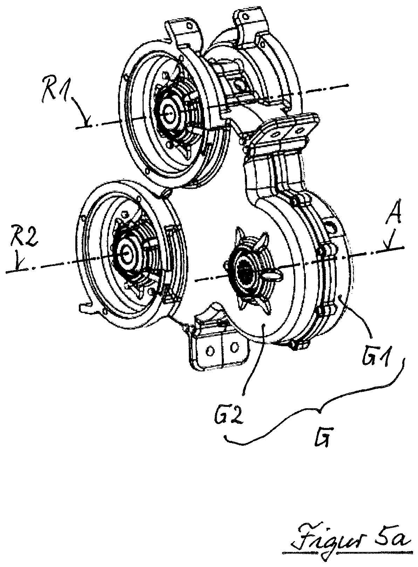

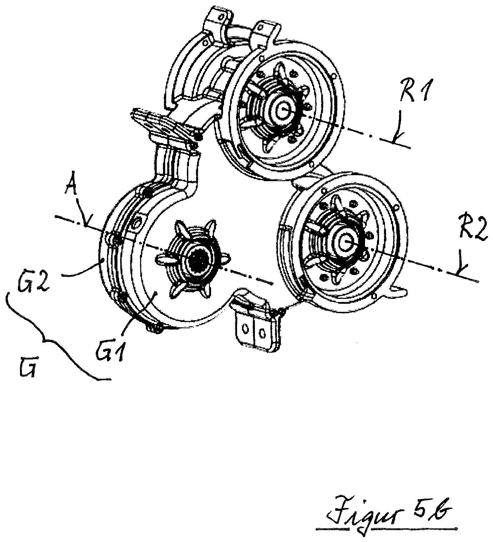

Bei der vorliegenden Konstruktion befinden sich die Elektromotoren E1, E2, E3, E4 - bezogen auf die Axialerstreckung der Rotationsachsen R1, R2 - beiderseits des Achsgetriebes AG. Dieses verfügt über ein bereits im Zusammenhang mit der Beschreibung zu Figur 1 erwähntes, umgebendes Gehäuse G, das in den Figuren 5a und 5b dargestellt und aus zwei Gehäusehälften G1 und G2 zusammengesetzt ist. Jede Gehäusehälfte G1 bzw. G2 ist außen mit Befestigungseinrichtungen (z.B. Ringflansche) für jeweils zwei Elektromotoren versehen. Somit ist im montierten Zustand des Achsantriebs das Gehäuse G mit dem darin angeordneten, aus den zwei Verbindungsgetrieben V1 und V2 bestehenden Achsgetriebe AG axial zwischen den Elektromotoren E1, E3 auf der einen Seite und E2, E4 auf der anderen Seite angeordnet, wobei die Elektromotoren E1 und E3 an der Gehäusehälfte G1 und die Elektromotoren E2 und E4 an der Gehäusehälfte G2 befestigt sind.

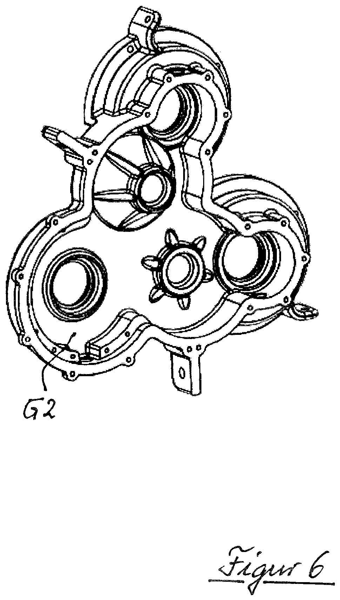

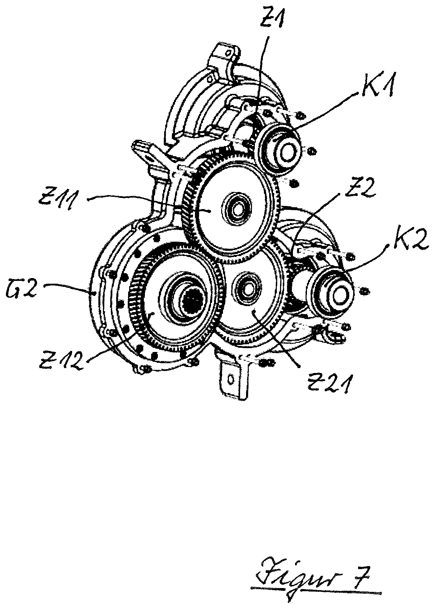

Die Figuren 6 und 7 veranschaulichen den Einbau des aus den beiden Verbindungsgetrieben V1, V2 bestehenden Achsgetriebes AG in das Getriebegehäuse G. Hierbei zeigt Figur 6 die leere Gehäusehälfte G2 von innen und Figur 2 die Gehäusehälfte G2 nach dem Einbau der Zahnräder des Achsgetriebes AG.

## Patentansprüche

1. Achsantrieb einer mobilen Arbeitsmaschine, insbesondere Flurförderzeug, mit Elektromotoren (E1, E2, E3, E4) zum Antrieb von zwei auf einer Achsmittellinie (A) angeordneten, einzeln angetriebenen Radnaben (2, 3), wobei die Radnaben (2, 3) jeweils mit mindestens zwei, zu einem Motorenverbund (M1 bzw. M2) mechanisch miteinander gekoppelten Elektromotoren (E1, E2 bzw. E3, E4) in Antriebsverbindung stehen, wobei die Motorenverbunde (M1, M2) jeweils koaxial zueinander fluchtende Elektromotoren (E1, E2 bzw. E3, E4) mit gemeinsamer Rotationsachse (R1 bzw. R2) aufweisen, **dadurch gekennzeichnet, dass** die Motorenverbunde (M1, M2) jeweils achsparallel zur Achsmittellinie (A) und achsparallel zueinander angeordnet sind und im Kraftfluss zwischen jedem Motorenverbund (M1 bzw. M2) und der davon angetriebenen Radnabe (2 bzw. 3) ein Verbindungsgetriebe (V1 bzw. V2) angeordnet ist.

2. Achsantrieb nach Anspruch 1, **dadurch gekennzeichnet, dass** ein erster Motorenverbund (M1) auf seiner Rotationsachse (R1) eine axial zwischen zwei Elektromotoren (E1, E2) angeordnete erste Koppelwelle (K1) aufweist, die an beiden Wellenenden jeweils mit einem der Elektromotoren (E1 bzw. E2) in Antriebsverbindung stehen, und dass ein zweiter Motorenverbund (M2) auf seiner Rotationsachse (R2) eine axial zwischen zwei Elektromotoren (E3, E4) angeordnete zweite Koppelwelle (K2) aufweist, die an beiden Wellenenden jeweils mit einem der Elektromotoren (E3 bzw. E4) in Antriebsverbindung stehen.

3. Achsantrieb nach Anspruch 2, **dadurch gekennzeichnet, dass** die erste Koppelwelle (K1) mit einem ersten Antriebsritzel (Z1) versehen ist, welches ein Eingangselement eines ersten Verbindungsgetriebes (V1) bildet, und dass die zweite Koppelwelle (K2) mit einem zweiten Antriebsritzel (Z2) versehen ist, welches ein Eingangselement eines zweiten Verbindungsgetriebes (V2) bildet.

4. Achsantrieb nach Anspruch 3, **dadurch gekennzeichnet, dass** die Antriebsritzel (Z1, Z2) jeweils als eingangsseitiges Zahnrad der als Stirnradgetriebe ausgeführten Verbindungsgetriebe (V1, V2) ausgebildet sind, die jeweils ein ausgangsseitiges Zahnrad (Z12 bzw. Z22) aufweisen, das konzentrisch zur Achsmittelinie (A) angeordnet ist.

5. Achsantrieb nach einem der Ansprüche 1 bis 4, **dadurch gekennzeichnet, dass** das erste (V1) und das zweite Verbindungsgetriebe (V2) parallel zueinander angeordnet sind.

6. Achsantrieb nach einem der Ansprüche 1 bis 5,
**dadurch gekennzeichnet, dass**
das erste (V1) und das zweite Verbindungsgetriebe (V2) zu einem Achsgetriebe (AG) räumlich zusammengefasst sind.

7. Achsantrieb nach Anspruch 6, **dadurch gekennzeichnet, dass** die Elektromotoren (E1, E2, E3, E4) - bezogen auf die Axialerstreckung der Rotationsachsen (R1, R2) - beiderseits des Achsgetriebes (AG) angeordnet sind.

8. Achsantrieb nach Anspruch 6 oder 7, **dadurch gekennzeichnet, dass** das Achsgetriebe (AG) ein für das erste (V1) und das zweite Verbindungsgetriebe (V2) gemeinsames Getriebegehäuse (G) aufweist.

9. Achsantrieb nach Anspruch 8, **dadurch gekennzeichnet, dass** die Elektromotoren (E1, E2, E3, E4) am Getriebegehäuse (G) des Achsgetriebes (AG) befestigt sind.

10. Achsantrieb nach einem der Ansprüche 1 bis 9, **dadurch gekennzeichnet, dass** eine von der Achsmittelinie (A) und der Rotationsachse (R1) des ersten Motorenverbunds (M1) aufgespannte erste Ebene (F1) und eine von der Achsmittellinie (A) und der Rotationsachse (R2) des zweiten Motorenverbunds (M2) aufgespannte zweite Ebene (F2) einen Winkel (W) miteinander einschließen.

11. Achsantrieb nach Anspruch 10, **dadurch gekennzeichnet, dass** der Winkel (W) kleiner als 90 Grad ist.

12. Achsantrieb nach Anspruch 10 oder 11, **dadurch gekennzeichnet, dass** die Achsmittellinie (A) und die Rotationsachsen (R1, R2) der Motorenverbunde (M1, M2) - in Axialrichtung gesehen - die Eckpunkte eines gleichschenkligen Dreiecks bilden, dessen Basis in einer von den Rotationsachsen (R1, R2) der Motorenverbunde (M1, M2) aufgespannten dritten Ebene (F3) liegt.

## Claims

1. Axle drive of a mobile working machine, in particular an industrial truck, having electric motors (E1, E2, E3, E4) for driving two individually driven wheel hubs (2, 3) arranged on an axle centre line (A), wherein the wheel hubs (2, 3) each have a drive connection to at least two electric motors (E1, E2 and E3, E4) coupled mechanically to each other to form a motor group (M1 and M2), wherein the motor groups (M1, M2) each have electric motors (E1, E2 and E3, E4) aligned coaxially with one another and having a common axis of rotation (R1 and R2), **characterized in that** the motor groups (M1, M2) are each arranged axially parallel to the axle centre line (A) and axially parallel to each other, and a connecting gear mechanism (V1 and V2) is arranged in the power flow between each motor group (M1 and M2) and the wheel hub (2 and 3) driven thereby.

2. Axle drive according to Claim 1, **characterized in that** a first motor group (M1) has on its axis of rotation (R1) a first coupling shaft (K1), which is arranged axially between two electric motors (E1, E2) and which, at both shaft ends, has a respective drive connection to one of the electric motors (E1 and E2), and **in that** a second motor group (M2) has on its axis of rotation (R2) a second coupling shaft (K2), which is arranged axially between two electric motors (E3, E4) and which, at both shaft ends, has a respective drive connection to one of the electric motors (E3 and E4).

3. Axle drive according to Claim 2, **characterized in that** the first coupling shaft (K1) is provided with a first drive pinion (Z1), which forms an input element of a first connecting gear mechanism (V1), and **in that** the second coupling shaft (K2) is provided with a second drive pinion (Z2), which forms an input element of a second connecting gear mechanism (V2).

4. Axle drive according to Claim 3, **characterized in that** the drive pinions (Z1, Z2) are each formed as a gear wheel on the input side of connecting gear mechanisms (V1, V2) configured as spur gear mechanisms, each of which has a gear wheel (Z12 and Z22) on the output side, which is arranged concentrically with the axle centre line (A).

5. Axle drive according to one of Claims 1 to 4, **characterized in that** the first (V1) and the second connecting gear mechanism (V2) are arranged parallel to each other.

6. Axle drive according to one of Claims 1 to 5, **characterized in that** the first (V1) and the second connecting gear mechanism (V2) are combined physically to form an axle gearbox (AG).

7. Axle drive according to Claim 6, **characterized in that** - based on the axial extent of the axes of rotation (R1, R2) - the electric motors (E1, E2, E3, E4) are arranged on both sides of the axle gearbox (AG).

8. Axle drive according to Claim 6 or 7, **characterized in that** the axle gearbox (AG) has a common gearbox housing (G) for the first (V1) and the second connecting gear mechanism (V2).

9. Axle drive according to Claim 8, **characterized in that** the electric motors (E1, E2, E3, E4) are fixed to the gearbox housing (G) of the axle gearbox (AG).

10. Axle drive according to one of Claims 1 to 9, **characterized in that** a first plane (F1) spanned by the axle centre line (A) and the axis of rotation (R1) of the first motor group (M1), and a second plane (F2) spanned by the axle centre line (A) and the axis of rotation (R2) of the second motor group (M2), enclose an angle (W) with each other.

11. Axle drive according to Claim 10, **characterized in that** the angle (W) is less than 90 degrees.

12. Axle drive according to Claim 10 or 11, **characterized in that** the axle centre line (A) and the axes of rotation (R1, R2) of the motor groups (M1, M2) - viewed in the axial direction - form the corner points of an equilateral triangle, the base of which lies in a third plane (F3) spanned by the axes of rotation (R1, R2) of the motor groups (M1, M2).

## Revendications

1. Entraînement d'essieu d'une machine de travail mobile, notamment d'un chariot de manutention, avec des moteurs électriques (E1, E2, E3, E4) pour l'entraînement de deux moyeux de roue (2, 3) agencés sur une ligne médiane d'essieu (A), entraînés individuellement, les moyeux de roue (2, 3) étant respectivement en liaison d'entraînement avec au moins deux moteurs électriques (E1, E2 ou E3, E4) couplés mécaniquement entre eux en un ensemble de moteurs (M1 ou M2), les ensembles de moteurs (M1, M2) présentant chacun des moteurs électriques (E1, E2 ou E3, E4) alignés coaxialement entre eux avec un axe de rotation commun (R1 ou R2), **caractérisé en ce que** les ensembles de moteurs (M1, M2) sont agencés respectivement en parallélisme axial avec la ligne médiane d'essieu (A) et en parallélisme axial entre eux, et un engrenage de liaison (V1 ou V2) est agencé dans le flux de force entre chaque ensemble de moteurs (M1 ou M2) et le moyeu de roue (2 ou 3) entraîné par celui-ci.

2. Entraînement d'essieu selon la revendication 1, **caractérisé en ce qu'**un premier ensemble de moteurs (M1) présente sur son axe de rotation (R1) un premier arbre de couplage (K1) agencé axialement entre deux moteurs électriques (E1, E2), qui est en liaison d'entraînement aux deux extrémités d'arbre avec respectivement l'un des moteurs électriques (E1 ou E2), et **en ce qu'**un deuxième ensemble de moteurs (M2) présente sur son axe de rotation (R2) un deuxième arbre de couplage (K2) agencé axialement entre deux moteurs électriques (E3, E4), qui est en liaison d'entraînement aux deux extrémités d'arbre avec respectivement l'un des moteurs électriques (E3 ou E4).

3. Entraînement d'essieu selon la revendication 2, **caractérisé en ce que** le premier arbre de couplage (K1) est muni d'un premier pignon d'entraînement (Z1) qui forme un élément d'entrée d'un premier engrenage de liaison (V1), et **en ce que** le deuxième arbre de couplage (K2) est muni d'un deuxième pignon d'entraînement (Z2) qui forme un élément d'entrée d'un deuxième engrenage de liaison (V2).

4. Entraînement d'essieu selon la revendication 3, **caractérisé en ce que** les pignons d'entraînement (Z1, Z2) sont chacun configurés sous forme de roue dentée côté entrée des engrenages de liaison (V1, V2) réalisés sous forme d'engrenages droits, qui présentent chacun une roue dentée côté sortie (Z12 ou Z22) qui est agencée concentriquement à la ligne médiane d'essieu (A).

5. Entraînement d'essieu selon l'une quelconque des revendications 1 à 4, **caractérisé en ce que** le premier (V1) et le deuxième (V2) engrenage de liaison sont agencés parallèlement l'un à l'autre.

6. Entraînement d'essieu selon l'une quelconque des revendications 1 à 5, **caractérisé en ce que** le premier (V1) et le deuxième (V2) engrenage de liaison sont réunis dans l'espace en un engrenage d'essieu (AG).

7. Entraînement d'essieu selon la revendication 6, **caractérisé en ce que** les moteurs électriques (E1, E2, E3, E4) sont agencés - par rapport à l'extension axiale des axes de rotation (R1, R2) - de part et d'autre de l'engrenage d'essieu (AG).

8. Entraînement d'essieu selon la revendication 6 ou 7, **caractérisé en ce que** l'engrenage d'essieu (AG) présente un boîtier d'engrenage commun (G) pour le premier (V1) et le deuxième (V2) engrenage de liaison.

9. Entraînement d'essieu selon la revendication 8, **caractérisé en ce que** les moteurs électriques (E1, E2, E3, E4) sont fixés au boîtier d'engrenage (G) de l'engrenage d'essieu (AG).

10. Entraînement d'essieu selon l'une quelconque des revendications 1 à 9, **caractérisé en ce qu'**un premier plan (F1) défini par la ligne médiane d'essieu (A) et l'axe de rotation (R1) du premier ensemble de moteurs (M1) et un deuxième plan (F2) défini par la ligne médiane d'essieu (A) et l'axe de rotation (R2) du deuxième ensemble de moteurs (M2) forment entre eux un angle (W).

11. Entraînement d'essieu selon la revendication 10, **caractérisé en ce que** l'angle (W) est inférieur à 90 degrés.

12. Entraînement d'essieu selon la revendication 10 ou 11, **caractérisé en ce que** la ligne médiane d'essieu (A) et les axes de rotation (R1, R2) des ensembles de moteurs (M1, M2) - vus dans la direction axiale - forment les sommets d'un triangle isocèle dont la base se situe dans un troisième plan (F3) défini par les axes de rotation (R1, R2) des ensembles de moteurs (M1, M2).
